# EUROPEAN PATENT SPECIFICATION

(11) **EP 2 675 530 B1**
(45) Date of publication and mention of the grant of the patent: **09.11.2016**
(21) Application number: 12719904.0
(22) Date of filing: 13.02.2012
(51) Int. Cl.: A62B 1/22, B64D 17/72

(54) **DEVICE AND METHOD FOR RESCUING FROM A HIGH-RISE FACILITY**
VORRICHTUNG UND VERFAHREN ZUR RETTUNG AUS EINER HOCHANLAGE
DISPOSITIF ET PROCÉDÉ DE SAUVETAGE À PARTIR D'UNE INSTALLATION DE GRANDE HAUTEUR

(30) Priority: 15.02.2011 RU 2011105298
(43) Date of publication of application: 25.12.2013
(73) Proprietor: Obschestvo S Ogranichennoi Otvetstvennostyu "Kosmicheskie Sistemy Spaseniya", Moskovskaya obl. 141400 (RU); Filatov, Andrey Vasilyevich, Korolev, Moskovskaya obl. 141080 (RU)
(72) Inventor: KULIK, Sergey Vasilyevich, Moscow 117607 (RU); METELEV, Yury Alekseevich, Moscow 123181 (RU)
(74) Representative: Cremer & Cremer
(86) International application number: PCT/RU2012/000098
(87) International publication number: WO 2012/112078

(56) References cited:
- WO-A1-2008/127143
- FR-A1- 2 748 941
- US-A1- 2008 179 462
- US-A1- 2011 315 475
- US-B1- 6 607 166

## Description

### Field of the Invention

The present invention relates to the devices and methods for rescuing, particularly to the devices and methods for rescuing people from high-rise facilities, for example, upper floors of multistorey buildings. The device and method according to the present invention can be used for individual rescuing a person at emergency escape from a high-rise facility, for example, a multistorey building, at fire or other emergency situation, when evacuation from a high-rise facility using traditional methods is impossible.

### Background of the Invention

It is known in the prior art corresponding to the present invention Russian Federation Patent 2399389, which discloses a device for emergency lowering of a person from a high-rise facility fastened to the back of a person and including a central toroidal chamber being inflated using an independent gas-filling source to which a membrane to arrange the person to be rescued is attached and which is connected on one side to inflatable spokes which, upon inflation, are arrangeable in a cone and which are interconnected by inflatable connectors, and being connected on the other side to an inflatable damping structure which has a toroidal inflatable chamber, which in relation to the central toroidal chamber is located oppositely to the arrangement of the inflatable spokes interconnected by connectors, therewith the toroidal inflatable chamber is communicated with the central toroidal chamber by the spokes being inflated and embodied by diameter which is greater than the diameter of the central toroidal chamber and is less than the diameter of the base of the cone which is formed by spokes which are straightened out upon inflation and are interconnected by connectors, therewith an air-impermeable perforated fabric is stretched between the spokes and every of the toroidal chambers, or the spokes together with the toroidal chambers are covered by air-impermeable perforated protective coverings in order to form a conical deceleration shield in the form of two truncated conical pyramids with a common base in the central toroidal chamber zone and with great bases having different diameters and oppositely directed, a membrane is stretched in the toroidal chamber with damping structure and the air-impermeable fabric is embodied as perforated and the independent gas-filling source communicates with one of the toroidal inflatable chambers or with one of the inflatable spokes, and the internal volumes of all the toroidal chambers and spokes communicate with one another and form a single closed volume.

Another such rescue device is disclosed in US 6 607 166 B1.

Shaping of a flying away trajectory is one of the most important aspects at rescuing people and facilities as it is known in the prior art corresponding to the present invention.

A step of shaping of the flying away trajectory begins immediately following separation of the device for rescuing together with a person to be rescued from the high-rise facility.

At the present step moving away of the device together with the person to be rescued for some distance from the high-rise facility, and orientation of the device in relation to earth and its stabilization occurs. The device finally goes into an operating position, notably it assumes its final shape.

The device in the operating position must be oriented in relation to earth in the following way: a damping device is directed down and the inflatable spokes arranged in a cone upon inflation and interconnected by inflatable connectors are directed up.

In such position smooth lowering of the device for rescuing together with the person to be rescued occurs later. Smooth lowering and low speed of lowering are provided at the expense of deceleration of the device in the atmosphere.

Upon shaping of the flying away trajectory a range of moving away of the device together with the person to be rescued for some distance from the high-rise facility is of great importance. The greater is a distance for which the device for rescuing has moved away from building the higher is a probability of successful lowering.

In doing so, a minimum distance of moving away from the high-rise facility exists for the above mentioned device. If the range of moving away of the device for rescuing is less than the minimum distance the orientation of the device and correspondingly, lowering in a normal mode are impossible.

In the said known device for rescuing the inflatable spokes which, upon inflation, are arrangeable in the cone rest against a wall of the high-rise facility. At the expense of effort exerted by the present spokes on the wall of the high-rise facility shaping of the flying away trajectory occurs.

However, the effort applied by the said spokes in accordance with the said known technical solution is deficient for guaranteed shaping of the flying away trajectory of the device for rescuing. In some cases, incomplete shaping of the flying away trajectory is possible, and correspondingly lowering in an abnormal mode is possible.

To increase the effort being applied by the spokes increase in geometric dimensions thereof is required. The increase in geometric dimensions leads to increase in an interior volume of the device for rescuing that means necessity to use the more powerful gas-filling source, increase in a weight of the device for rescuing and increase in its volume in a folded up inactive state. Increase in the said weight and volume is objectionable as the present type of the device for rescuing is supposed for use in stress situations.

### Summary of the Invention

The present invention is based on the problem of creating a device for rescuing from a high-rise facility which provides high reliability level of the device for rescuing from the high-rise facility and high probability of a safe touchdown, in particular a high probability of correct shaping of the flying away trajectory and lowering in a normal mode and high indices of reducing speed of lowering without essential increase in the weight and interior volume of the device and correspondingly the problem to provide a greater distance of moving away from the high-rise facility.

This problem is accomplished by using a device for rescuing from the high-rise facility comprising several resilient for bending spokes interconnected on one end to form a pyramidal figure, wherein the spokes are located on the edges, an aerodynamic deceleration element fastened to the spokes, connectors located between adjacent resilient for bending spokes, in so doing the connectors are located at some distance from the ends of the resilient for bending spokes, a buffer element fastened in a point of connection of the resilient for bending spokes and a means of fastening an object to be rescued fastened in the point of connection of the resilient for bending spokes on the other side with respect to the buffer element, in so doing each of the resilient for bending spokes is embodied as curved sideways from a central axis of the device.

The resilient for bending spokes interconnected to form the pyramidal figure and the connectors between the spokes form a carcass wherein the aerodynamic deceleration element is located. Rigidity of a construction is provided by the connectors between the spokes. The said elements together provide deceleration of the device for rescuing during a flight and provide the smooth lowering of the device with a determined speed of lowering. The buffer element provides damping of speed of lowering upon touchdown.

A curved shape of the resilient for bending spokes provides a greater effort for repulsion of the device for rescuing from the high-rise facility and correspondingly, a greater moving away of the device for rescuing from the high-rise facility, high probability of correct shaping of the flying away trajectory and as a result high reliability level of the device for rescuing from the high-rise facility and high probability of the safe touchdown.

Preferably, the resilient for bending spokes and the connectors represent inflatable elements and the device for rescuing additionally comprises at least one gas-filling means to fill the resilient for bending spokes and the connectors.

Using the inflatable elements provides a small volume of the device for rescuing in the folded up inactive state.

Moreover, the resilient for bending spokes and the connectors can have a single interior volume. This provides a possibility to use the one gas-filling means.

Deceleration shields fastened to the resilient for bending spokes between the adjacent resilient for bending spokes can be used as the aerodynamic deceleration element.

Parachute domes fastened to the resilient for bending spokes between the adjacent resilient for bending spokes can be also used as the aerodynamic deceleration element.

Preferably, the resilient for bending spokes are interconnected through a connection element, representing a toroidal chamber and the buffer element is embodied as several inflatable spokes fastened to the connection element and directed oppositely to the resilient for bending spokes and the ends of the inflatable spokes are interconnected using inextensible or low-extensible connecting elements.

The toroidal chamber serves as a basic connecting and force element and provides a rigidity of a carcass of the device for rescuing along with the connectors.

The inextensible or low-extensible connecting elements of the spokes of the buffer element do not allow the buffer element to become deformed with a loss of its buffer properties upon touchdown, i.e. they essentially provide a constant shape of the buffer element at the moment of touchdown, in doing so they have small weight that means less speed of lowering and correspondingly, improvement of the reliability of the device for rescuing from the high-rise facility and enhancement of the probability of the safe touchdown.

Preferably, inextensible or low-extensible material serving as the inextensible or low-extensible connecting elements is fastened to the ends of the inflatable spokes of the buffer device.

It is also preferable that the connecting element represents an inflatable element, in doing so all the inflatable elements of the device have a single volume and the device additionally comprises at least the one gas-filling means to fill all the inflatable elements of the device for rescuing.

This problem is also accomplished by using the device for rescuing from the high-rise facility comprising several resilient for bending spokes, the connecting element, in doing so the resilient for bending spokes are adjoined on one side to the connecting element, the aerodynamic deceleration element fastened to the resilient for bending spokes, the connectors located between the adjacent resilient for bending spokes, in doing so the connectors are located at some distance from the ends of the resilient for bending spokes, the means of fastening the object to be rescued fastened to the connecting element and the buffer element adjoined to the connecting element on the other side with respect to the resilient for bending spokes, in so doing each of the resilient for bending spokes is embodied as curved sideways from the central axis of the device.

The resilient for bending spokes, the connecting element and the connectors between the spokes form a carcass wherein the aerodynamic deceleration element is located. Rigidity of a construction is provided by the connectors between the spokes and the connecting element. The said elements together provide deceleration of the device for rescuing during a flight and provide the smooth lowering of the device with a determined speed of lowering. The buffer element provides damping of speed of lowering upon touchdown.

The curved shape of the resilient for bending spokes provides a greater effort for repulsion of the device for rescuing from the high-rise facility and correspondingly, a greater moving away of the device for rescuing from the high-rise facility, high probability of correct shaping of the flight trajectory and as a result high reliability level of the device for rescuing from the high-rise facility and high probability of the safe touchdown.

Preferably, the resilient for bending spokes, the connectors and the connecting element represent inflatable elements and the device for rescuing additionally comprises at least the one gas-filling means to fill the resilient for bending spokes and the connectors.

Using the inflatable elements provides small volume of the device for rescuing in the folded up inactive state.

Moreover, the resilient for bending spokes and the connectors can have single interior volume. This provides the possibility to use the one gas-filling means.

The deceleration shields fastened to the resilient for bending spokes between the adjacent resilient for bending spokes can be used as the aerodynamic deceleration element.

The parachute domes fastened to the resilient for bending spokes between the adjacent resilient for bending spokes can be also used as the aerodynamic deceleration element.

Preferably, the connecting element is made as a toroidal chamber and the buffer element is embodied as several inflatable spokes fastened to the connection element and directed oppositely to the resilient for bending spokes and the ends of the inflatable spokes of the buffer element are interconnected using inextensible or low-extensible connecting elements.

The inextensible or low-extensible connecting elements of the spokes of the buffer element do not allow the buffer element to become deformed with a loss of its buffer properties upon touchdown, i.e. they essentially provide a constant shape of the buffer element at the moment of touchdown, in doing so they have a small weight that means less speed of lowering and correspondingly, improvement of the reliability of the device for rescuing from a high-rise facility and enhancement of the probability of the safe touchdown.

Preferably, the inextensible or low-extensible material serving as the inextensible or low-extensible connecting elements is fastened to the ends of the inflatable spokes of the buffer device.

It is also preferable that the connecting element represents an inflatable element, in doing so all the inflatable elements of the device have single volume and the device additionally comprises at least the one gas-filling means to fill all the inflatable elements of the device for rescuing.

This problem is also accomplished by using the device for rescuing from the high-rise facility comprising several resilient for bending spokes, the toroidal chamber, in doing so the resilient for bending spokes are adjoined on one side to the toroidal chamber, the aerodynamic deceleration element fastened to the resilient for bending spokes, the connectors located between the adjacent resilient for bending spokes, in doing so the connectors are located at some distance from the ends of the resilient for bending spokes, the means of fastening the object to be rescued fastened to the toroidal chamber and the buffer element representing the spokes adjoined to the toroidal chamber on the other side with respect to the resilient for bending spokes, in so doing each of the resilient for bending spokes has at least one bend sideways from the central axis of the device and the connectors are located near the present bend and the inextensible or low-extensible material is fastened to the ends of the spokes of the buffer device.

The resilient for bending spokes, the toroidal chamber and the connectors between the spokes form a carcass wherein the aerodynamic deceleration element is located. Rigidity of a construction is provided by the connectors between the spokes and the toroidal chamber. The said elements together provide deceleration of the device for rescuing during a flight and provide the smooth lowering of the device with a determined speed of lowering. The buffer element provides damping of speed of lowering upon touchdown.

The curved shape of the resilient for bending spokes provides a greater effort for repulsion of the device for rescuing from the high-rise facility and correspondingly, a greater moving away of the device for rescuing from the high-rise facility, high probability of correct shaping of the flying away trajectory and as a result high reliability level of the device for rescuing from the high-rise facility and high probability of the safe touchdown.

The inextensible or low-extensible material fastened to the spokes of the buffer element does not allow the buffer element to become deformed with a loss of its buffer properties upon touchdown, i.e. it essentially provides a constant shape of the buffer element at the moment of touchdown, in doing so it has a small weight that means less speed of lowering and correspondingly, improvement of the reliability of the device for rescuing from the high-rise facility and enhancement of the probability of the safe touchdown.

Preferably, the resilient for bending spokes, the connectors, the toroidal chamber and the spokes of the buffer element represent inflatable elements and the device for rescuing additionally comprises at least the one gas-filling means to fill the resilient for bending spokes and the connectors.

Using the inflatable elements provides small volume of the device for rescuing in the folded up inactive state.

Moreover, the resilient for bending spokes, the connectors, the toroidal chamber and the spokes of the buffer device can have single interior volume. This provides the possibility to use the one gas-filling means.

The deceleration shields fastened to the resilient for bending spokes between the adjacent resilient for bending spokes can be used as the aerodynamic deceleration element.

The parachute domes fastened to the resilient for bending spokes between the adjacent resilient for bending spokes can be also used as the aerodynamic deceleration element.

Additionally, each of the resilient for bending spokes can have two bends sideways from the central axis of the device and the connectors are located near the nearest bond to the toroidal chamber.

This problem is also accomplished by using the buffer device representing a part of the device for rescuing from the high-rise facility comprising several inflatable spokes fastened to the connecting element and directed to one side from the connecting element, in doing so the ends of the inflatable spokes of the buffer device are interconnected using the inextensible or low-extensible connecting elements.

The inextensible or low-extensible connecting elements of the spokes of the buffer element do not allow the buffer element to become deformed with a loss of its buffer properties upon touchdown, i.e. they essentially provide a constant shape of the buffer element at the moment of touchdown, in doing so they have small weight that means less speed of lowering and correspondingly, improvement of the reliability of the device for rescuing from the high-rise facility and enhancement of the probability of the safe touchdown.

Preferably, the inextensible or low-extensible material serving as the inextensible or low-extensible connecting elements is fastened to the ends of the inflatable spokes of the buffer device.

The inflatable spokes can also be embodied as curved. The buffer device with curved spokes retains better its shape upon touchdown.

Moreover, it is preferable that the connecting element has a toroidal shape and embodied as inflatable.

This problem is also accomplished by a method for lowering from the high-rise facility using the device for rescuing to be filled with gas, comprising an arrangement of the object to be lowered with the device for rescuing fastened to it at the edge of the high-rise facility, in doing so the device for rescuing is located from outer side of the high-rise facility and fixation of a position of the object to be rescued and means of rescuing in relation to the high-rise facility using a means of fixation; initialization at least of one source to fill the device for rescuing with gas, opening of a knapsack of a container and stretching of elements of the device for rescuing; disconnection of the means of fixation with subsequent catapulting of the object to be rescued from the high-rise facility upon achievement of a determined degree of filling the device for rescuing with gas; filling with gas and stretching of the device for rescuing to an active position and further lowering; damping of speed of lowering by the buffer element upon touchdown.

Fixation of the position of the object to be rescued and the means of rescuing in relation to the high-rise facility and subsequent disconnection of the means of fixation upon achievement of the determined degree of filling the device for rescuing with gas makes it possible to form an effort for repulsion of the device for rescuing from the high-rise facility and thereby to impart a much greater momentum to the device for rescuing together with the object to be rescued.

This makes it possible to provide a greater distance of moving away from the high-rise facility that means shaping of more safe flying away trajectory and correspondingly, enhancement of the probability of the safe touchdown and the reliability of the device.

This problem is also accomplished by using the device for rescuing from the high-rise facility comprising inflatable elements to be filled with gas to which the aerodynamic deceleration element is fastened, at least one source to fill the inflatable elements of the device with gas and the means of fixation of the device for rescuing in relation to the high-rise facility, in doing so the device for rescuing is embodied with a possibility to disconnect the means of fixation upon achievement of the determined degree of filling the carcass with gas.

The means of fixation of the position of the object to be rescued and the means of rescuing in relation to the high-rise facility and the possibility of its subsequent disconnecting upon achievement of the determined degree of filling the device for rescuing with gas makes it possible to form an effort for repulsion of the device for rescuing from the high-rise facility and thereby to impart a much greater momentum to the device for rescuing together with the object to be rescued.

This makes it possible to provide a greater distance of moving away from the high-rise facility that means shaping of more safe flying away trajectory and correspondingly, enhancement of the probability of the safe touchdown and the reliability of the device.

Additionally, the source to fill with gas can continue filling of the inflatable elements of the device for rescuing after breaking of the means of fixation to achieve active stretched state of the device for rescuing.

The carcass of the device can comprise several resilient for bending spokes, the connecting element, in doing so the resilient for bending spokes are adjoined on one side to the connecting element, the connectors located between the adjacent resilient for bending spokes, in doing so the connectors are located at some distance from the ends of the resilient for bending spokes, the means of fastening the object to be rescued fastened to the connecting element and the buffer element adjoined to the connecting element on the other side with respect to the resilient for bending spokes, in doing so the aerodynamic deceleration element fastened to the resilient for bending spokes.

Preferably, each of the resilient for bending spokes is embodied as curved sideways from the central axis of the device.

The curved shape of the resilient for bending spokes provides a greater effort for repulsion of the device for rescuing from the high-rise facility and correspondingly, a greater moving away of the device for rescuing from the high-rise facility, high probability of correct shaping of the flying away trajectory and as a result high reliability level of the device for rescuing from the high-rise facility and high probability of the safe touchdown.

Preferably, the buffer element is embodied as several inflatable spokes fastened to the connection element and directed oppositely to the resilient for bending spokes and the inextensible or low-extensible material is fastened to the ends of the spokes of the buffer device.

The inextensible or low-extensible material fastened to the spokes of the buffer element do not allow the buffer element to become deformed with a loss of its buffer properties upon touchdown, i.e. it essentially provides a constant shape of the buffer element at the moment of touchdown, in doing so it has small weight that means less speed of lowering and correspondingly, enhancement of the reliability of the device for rescuing and the probability of the safe touchdown.

This problem is also accomplished by a method for actuation of the device for rescuing from the high-rise facility comprising the inflatable elements of the device to be filled with gas to which the aerodynamic deceleration element is fastened, at least one source to fill the inflatable elements of the device with gas and the means of fixation of the device for rescuing in relation to the high-rise facility consisting in blocking of the means of fixation of the device for rescuing in relation to the high-rise facility and filling the inflatable elements of the device with gas using at least the one source to fill the inflatable elements of the device with gas; disconnecting of the means of fixation upon achievement of the determined degree of filling the inflatable elements of the device with gas.

Blocking of the means of fixation of the position of the object to be rescued and the means of rescuing in relation to the high-rise facility and its subsequent breaking upon achievement of the determined degree of filling the device for rescuing with gas makes it possible to form an effort for repulsion of the device for rescuing from the high-rise facility and thereby to impart a much greater momentum to the device for rescuing together with the object to be rescued.

This makes it possible to provide a greater distance of moving away from the high-rise facility that means shaping of more safe flying away trajectory and correspondingly, enhancement of the probability of the safe touchdown and the reliability of the device.

Additionally, the source to fill with gas can continue filling of the inflatable elements of the device of the device for rescuing after disconnecting of the means of fixation to achieve active stretched state of the device for rescuing.

Preferably, the inflatable elements of the device for rescuing comprises several resilient for bending spokes, the connecting element, in doing so the resilient for bending spokes are adjoined on one side to the connecting element, the connectors located between the adjacent resilient for bending spokes, in doing so the connectors are located at some distance from the ends of the resilient for bending spokes and at the step prior to disconnecting of the means of fixation the resilient for bending spokes rest against the wall of the high-rise facility from outer side and the connectors form a perimeter which does not allow the resilient for bending spokes to stretch into the active position.

It is also preferable that, upon filling the inflatable elements of the device with gas after disconnecting of the means of fixation the device for rescuing assumes its final active shape.

### Description of the Drawings

The invention will now be described in greater detail with reference to various specific embodiments thereof taken in conjunction with the accompanying drawings, in which:
Fig. 1 shows a side view in section of a first variant of embodiment of the invention;
Fig. 2 shows an isometric view of the first variant of embodiment of the invention;
Fig. 3 shows a side view in section of a second variant of embodiment of the invention;
Fig. 4 shows a side view in section of a third variant of embodiment of the invention;
Fig. 5 shows a side view in section of a fourth variant of embodiment of the invention;
Fig. 6 shows a side view in section of a fifth variant of embodiment of the invention;
Fig. 7 shows an isometric view of the device for rescuing provided with domes;
Fig. 8 shows the device for rescuing in a preflight state;
Fig. 9 shows stages of a flight of the device for rescuing from the high-rise facility;
Fig. 10 shows a diagram of arrangement of the elements in the device for rescuing;
Fig. 11 shows a diagram of arrangement of the elements in the device for rescuing with the spokes curved along the full length;

The device for rescuing from the high-rise facility according to the present invention represents a free parachute system.

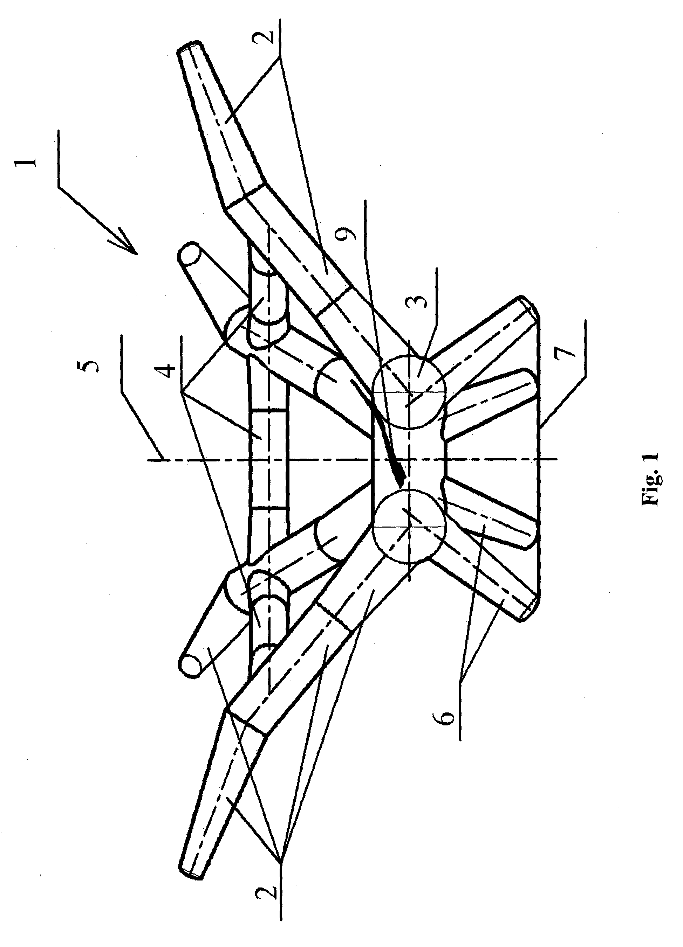

As shown in Fig. 1, the device for rescuing 1 according to the first variant of embodiment of the invention comprises several spokes 2. The spokes are embodied as resilient for bending.

As shown in Fig. 1, the device for rescuing 1 comprises six resilient for bending spokes 2. The device can comprise another quantity of the resilient for bending spokes 2, e.g. eight.

Each of the resilient for bending spokes 2 is adjoined to a toroidal chamber 3. The toroidal chamber 3 serves as a connecting and force element.

Thus, all the resilient for bending spokes 2 are interconnected through the toroidal chamber 3 on one end. The other end of the resilient for bending spokes 2 remains free.

Connectors 4 are fastened between the adjacent resilient for bending spokes 2.

The connectors 4 are fastened at some distance from the ends of the resilient for bending spokes 2. Thus, the other free end of the resilient for bending spokes 2 remains free.

The connectors 4 serve as an additional force element and provide rigidity of the device for rescuing 1, thereby they enhance the reliability of the device 1.

According to the best embodiment of the invention the resilient for bending spokes 2 are located on edges of a figure generally representing a truncated pyramid. In so doing, the toroidal chamber 3 corresponds to the lesser base of the truncated pyramid.

The resilient for bending spokes 2 have one bend in the direction from the central axis of the device 5.

The connectors 4 are located near the bend of the resilient for bending spokes 2.

Spokes 6 of a buffer element are fastened to the toroidal chamber 3 on the other side of the toroidal chamber 3 in relation to the resilient for bending spokes 2.

The spokes 6 of the buffer element are embodied as diverged from one another in the direction from the toroidal chamber 3 towards their free ends.

The toroidal chamber 3 serves as a basic connecting and force element of the device and represents one of the parts of the buffer element.

Free ends of the spokes 6 of the buffer element are interconnected using inextensible or low-extensible elements.

According to the best embodiment of the buffer element inextensible or low-extensible material 7 is fastened between the free ends of the spokes 6 of the buffer element.

Use of inextensible or low-extensible connecting elements provides retaining of a shape of the buffer element upon touchdown, in doing so it makes it possible to refuse using on the ends of the spokes 6 of the buffer element some toroidal chamber or connectors serving as a force element.

The inextensible or low-extensible connecting elements, particularly the inextensible or low-extensible material 7 serve as the force element. In doing so use of the inextensible or low-extensible connecting elements, particularly the inextensible or low-extensible material 7 provides reduction of the weight of the device for rescuing and correspondingly, enhances its reliability and the probability of the safe touchdown.

According to the best embodiment of the invention all referred above elements of a carcass of the device for rescuing 1 are embodied as inflatable, i.e. as to be filled with gas.

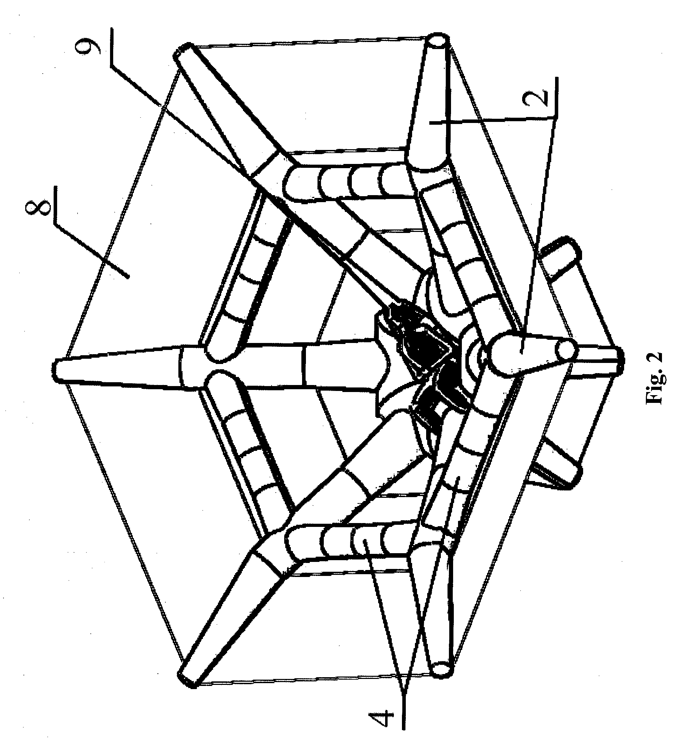

As shown in Fig. 2, deceleration shields 8 are fastened between the adjacent resilient for bending spokes 2.

Said deceleration shields 8 form an aerodynamic deceleration element of the device for rescuing 1.

As shown in Fig. 1, a cradle 9 intended for safe fastening of a person to be rescued is fastened to the toroidal chamber 3. Generally, the cradle 9 serves as a means of fastening of the person to be rescued.

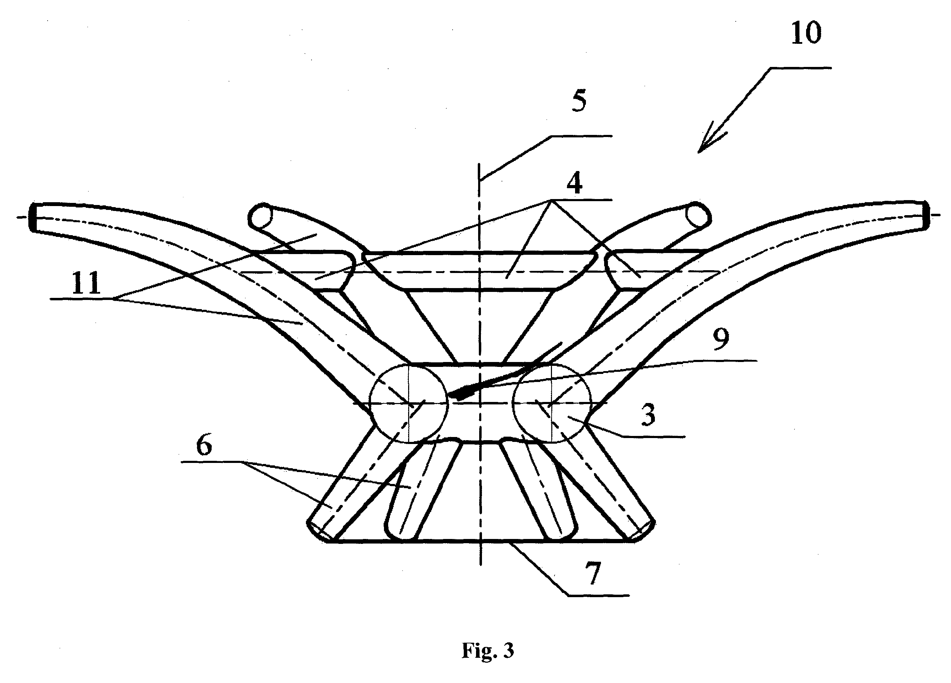

The second variant of embodiment of the invention is shown in Fig. 3.

All the elements of a device for rescuing 10 are analogous to the respective elements of the device for rescuing 1 described with reference to Fig. 1 and Fig. 2 and they fulfil the same part.

Resilient for bending spokes 11 of the device for rescuing 10 do not have a bend but embodied as curved along the full length, as distinguished from the first variant of embodiment of the invention. In doing so the direction of the bend is the same, notably-from a central axis 5 of the device.

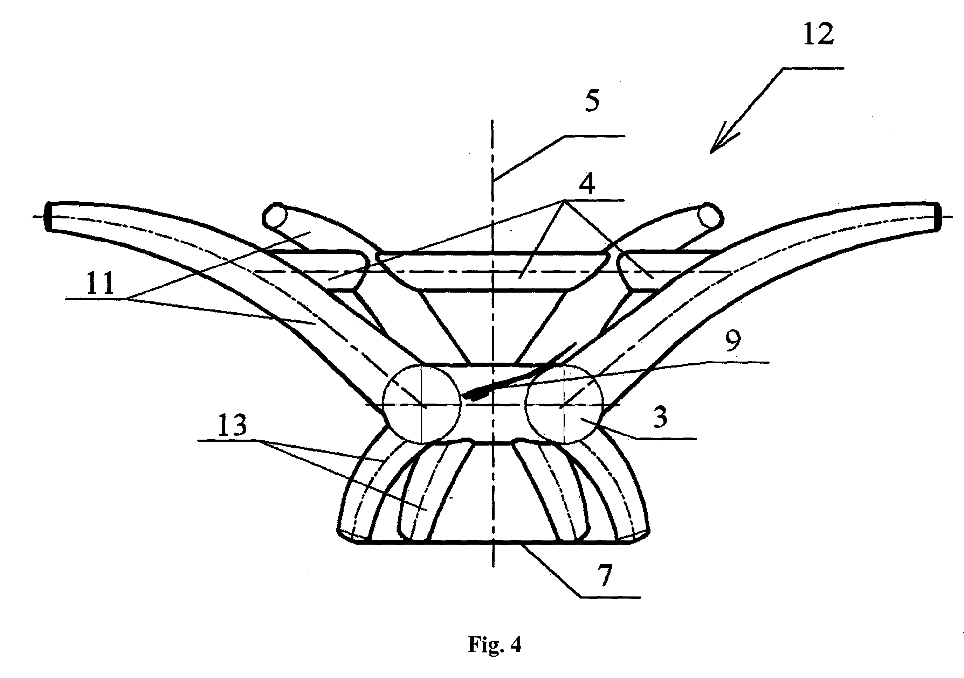

The third variant of embodiment of the invention is shown in Fig. 4.

All the elements of a device for rescuing 12 are analogous to the respective elements of the device for rescuing 10 described with reference to Fig. 3 and they fulfil the same part.

Spokes 13 of the buffer element are embodied as curved along the full length, as distinguished from the first and the second variants of embodiment of the invention.

The buffer element with curved spokes 13 better retains its shape upon touchdown.

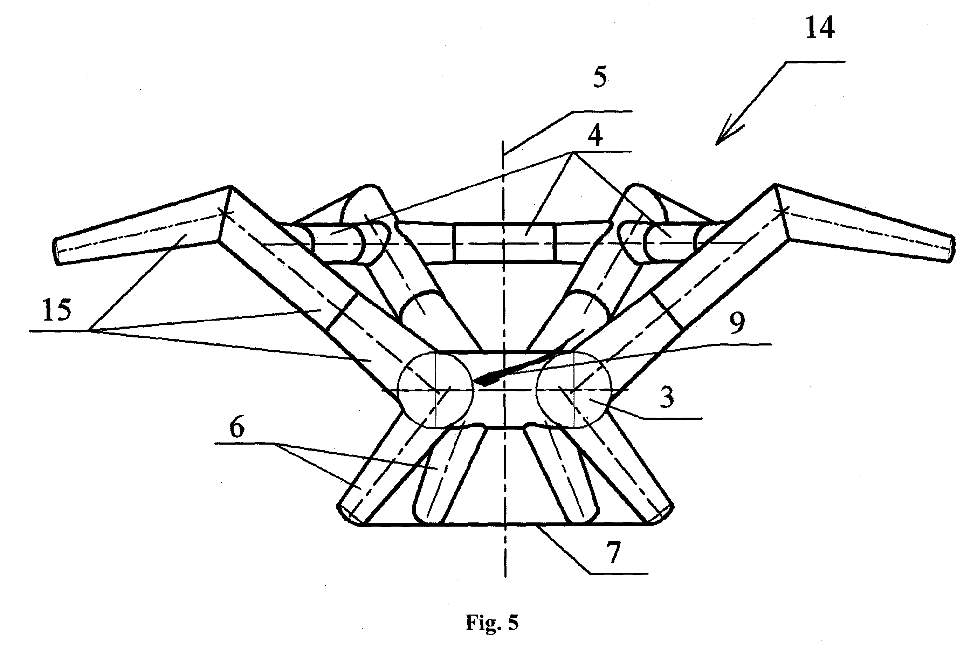

The fourth variant of embodiment of the invention is shown in Fig. 5.

All the elements of a device for rescuing 14 are analogous to the respective elements of the device for rescuing 1 described with reference to Fig. 1 and Fig. 2 and they fulfil the same part.

Resilient for bending spokes 15 of the device for rescuing 14 have a bigger bend, as distinguished from the first variant of embodiment of the invention. Said bend is such that free ends of the resilient for bending spokes 15 are located below a point of the bend thereof. The direction of the bend is the same - from the central axis 5 of the device.

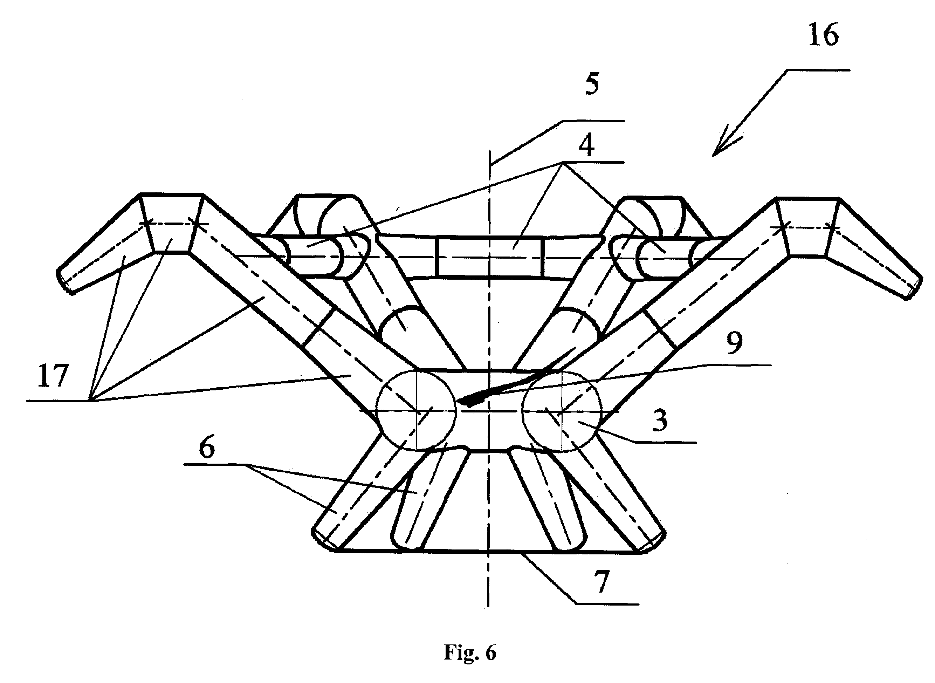

The fifth variant of embodiment of the invention is shown in Fig. 6.

All the elements of a device for rescuing 16 are analogous to the respective elements of the device for rescuing 1 described with reference to Fig. 1 and Fig. 2 and they fulfil the same part.

Resilient for bending spokes 17 of the device for rescuing 16 have an additional second bend, as distinguished from the first variant of embodiment of the invention. Said bend is such that free ends of the resilient for bending spokes 17 are located below a point of the second bend. The direction of the bend is the same - from the central axis 5 of the device.

It should be noted that the resilient for bending spokes 6 according to any variant of embodiment of the invention can be embodied as curved along the full length, analogously to the spokes 13 of the buffer element according to the third variant of embodiment of the invention.

The resilient for bending spokes 2, 11, 15, 17, the toroidal chamber 3, the connectors 4 and the spokes 6, 13 of the buffer element form a carcass of the device for rescuing from a high-rise facility.

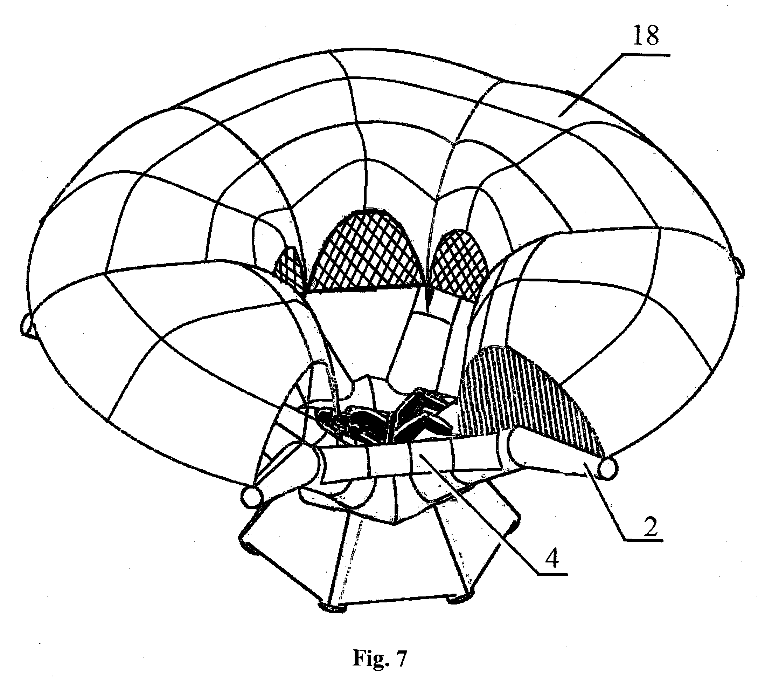

As shown in Fig. 7, the device for rescuing can be provided with parachute domes 18 instead of the deceleration shields 8.

Said parachute domes 18 form an aerodynamic deceleration element of the device for rescuing.

The parachute domes 18 can be used to form the aerodynamic deceleration element in any of the described above variants of embodiment of the invention.

All the variants of embodiment of the invention comprise at least one means to fill the device with gas.

According to the preferred embodiment of the invention all the elements of the device to be filled with gas have one common volume that makes it possible to use one source of filling the device with gas and have one point of connection of the source of filling the device with gas with an interior volume of the device.

The isometric view of the device for rescuing 1 according the first variant of embodiment of the invention is shown in Fig. 2. The isometric views of the devices for rescuing 10, 12, 14 and 16 according to the second, third, fourth and fifth variants of embodiment, essentially are analogous to the isometric view of the first variant of embodiment and they are not shown in the accompanied drawings. Differences between said isometric views and that presented in Fig. 2 are completely due to features in design of the devices 10, 12, 14 and 16 which are shown in Fig. 3, 4, 5 and 6.

The device for rescuing in an active state is shown in Fig. 1-7, i.e. in the filled with gas to a determined pressure and stretched state.

In an inactive state the device for rescuing is not filled with gas.

The cradle 9 has a tethering system for safe fastening and fixation of a person or other object to be rescued. A person is attracted by the tethering system to the cradle 9 with the back.

In the active state the device for rescuing represents a knapsack-container. The cradle 9 is a part of said knapsack-container and inside which the device for rescuing with all its systems is packed.

In so doing, as described above the cradle 9 is fastened to the toroidal chamber 3 to which all other elements of the device are fastened.

Any of said above variants of embodiment of the invention operates as follows.

The device for rescuing has several states: an inactive assembled state, a prestarting state, a starting state and an active state.

Between the inactive state and the prestarting state are performed the following actions.

The device for rescuing is fastened on the back of the person or other object to be rescued using the tethering or some other system.

Further the object to be rescued is arranged at a starting position, notably at the edge of a high-rise facility, in so doing the knapsack is arranged from the outer side of the high-rise facility, e.g. in a window opening with the knapsack directed outside from the building.

The device additionally comprises a starting tether 19, which is fastened to the device for rescuing and intended for fastening of the device for rescuing to the high-rise facility. Preferably, the starting tether 19 is fastened to the high-rise facility inside it opposite the starting position.

When arranged at the starting position, the starting tether 19 is blocked and initialization of the gas-filling source occurs. At least, lengthening of the starting tether 19 is limited. Opening of the knapsack-container is also performed.

Under a pressure of gas coming into the interior volume of the device for rescuing, the latter is stretched and turns into the prestarting state.

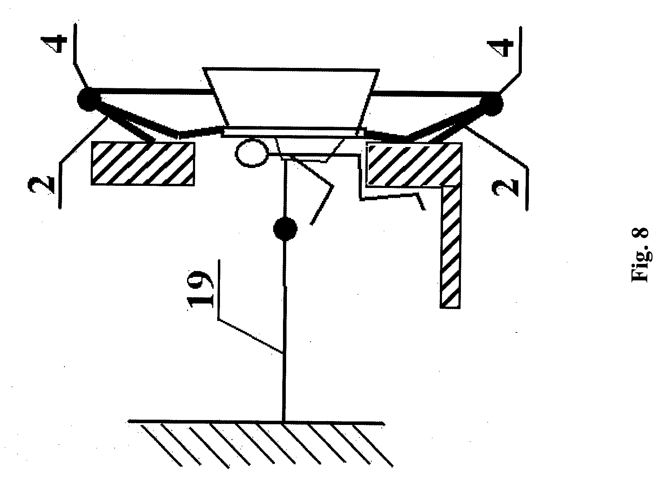

In diagram form the present state of the device for rescuing is shown in Fig. 8.

Upon inflating and stretching, the device for rescuing from the high-rise facility rests against a wall of a high-rise facility from the outer side.

In doing so, the connectors 4 form a perimeter which does not allow the resilient for bending spokes 2 to stretch into the active position as the starting tether 19 is blocked and does not allow the object to be rescued to move in the direction out of the high-rise facility.

Consequently, as the device for rescuing is being filled with gas at the expense of resilient forces arising between the wall of the high-rise facility and the elements of the device for rescuing, an effort for repulsion of the device for rescuing from the high-rise facility increases.

On a determined degree of filling the device for rescuing with gas and correspondingly, achieving a determined internal pressure of the device for rescuing and a determined effort for repulsion of the device for rescuing from the high-rise facility the device for rescuing turns into the starting state.

The starting tether 19 is disconnected in the starting state.

On disconnection of the starting tether 19 nothing holds the device for rescuing and the object to be rescued catapults from the high-rise facility at the expense of the generated effort for repulsion of the device for rescuing from the high-rise facility.

Using the starting tether 19 and its disconnection at the moment upon achieving the determined degree of filling the device for rescuing with gas and correspondingly, achievement of the determined internal pressure of the device for rescuing and the determined effort for repulsion of the device for rescuing from the high-rise facility makes it possible to impart a much greater momentum to the device for rescuing together with the object to be rescued than without using it.

This makes it possible to provide a greater distance of moving away from a high-rise facility that means shaping of more safe flying away trajectory and correspondingly, enhancement of the probability of the safe touchdown and the reliability of the device.

On disconnection of the starting tether 19 the gas-filling source continues to operate. Consequently, all the elements of the device for rescuing are stretched in the active position of their own, i.e. the device for rescuing carries out a transition into the active state in the flight, notably at the step of shaping of the flying away trajectory.

On assuming of the active state the device for rescuing orientates in relation to earth, stabilizes and lowering at a determined speed is performed.

At the moment of touchdown remaining speed is damped by the buffer element.

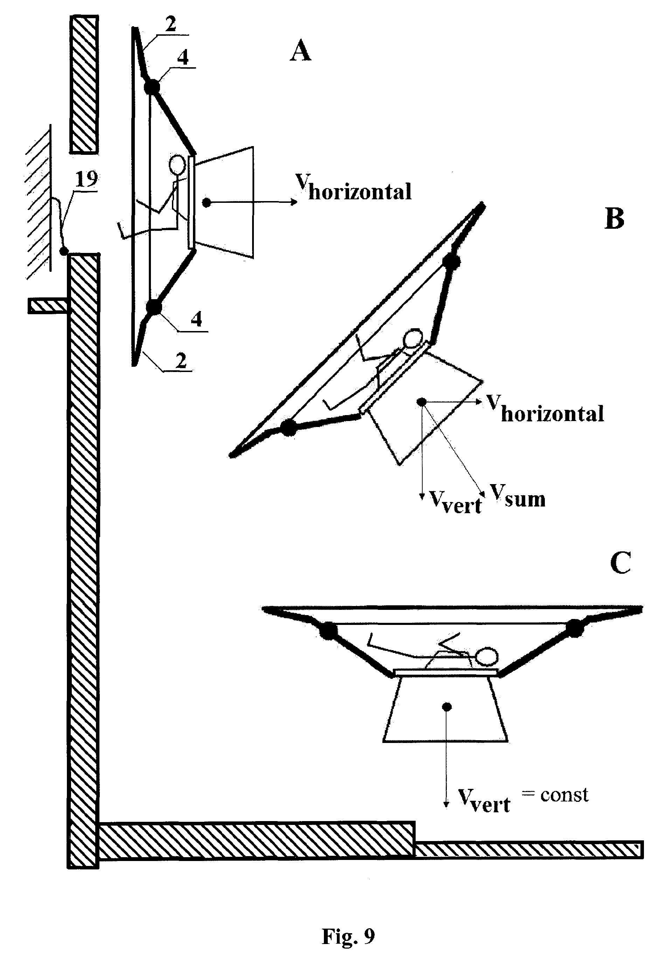

The steps of the fight of the device for rescuing from the high-rise facility are shown in Fig. 9.

In position "A" the device for rescuing on disconnection of the starting tether 19 is shown. The device for rescuing is at some distance from the high-rise facility. The gas-filling source continues to operate. The elements of the device are stretched. Filling the device with gas to a required pressure occurs.

In position "B" aerodynamic orientation and stabilization of the device for rescuing occurs.

In position "C" lowering of the device for rescuing at a constant steady speed of descent Vᵥₑᵣₜ occurs.

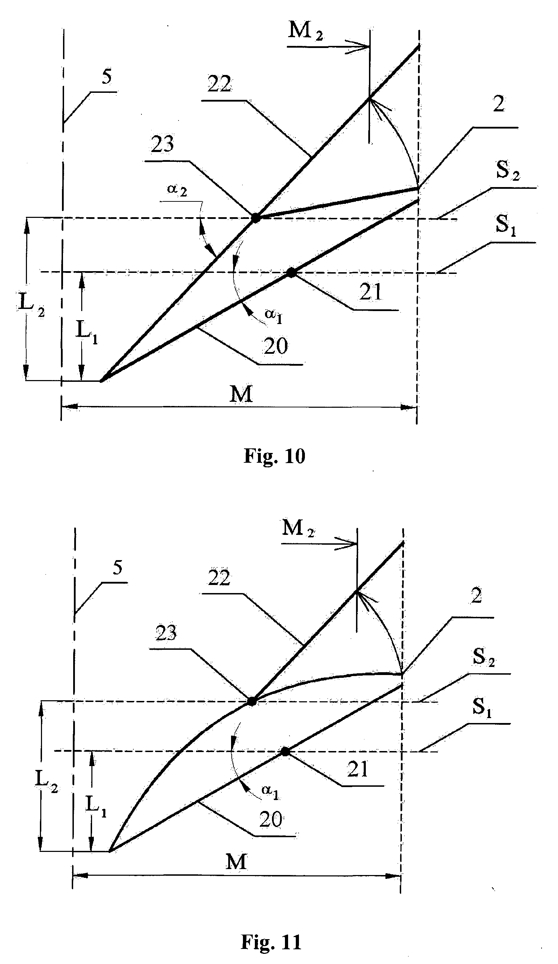

The diagram of arrangement of the elements in the device for rescuing according to the present invention compared to the known technical solution is shown in Fig. 10.

The resilient for bending spokes of the known technical solution are denoted by position 20. A point of fastening the connectors between the adjacent resilient for bending spokes is denoted by position 21.

A distance L determines the effort for repulsion of the device for rescuing from the high-rise facility which can be achieved at the step of filling the device for rescuing prior to disconnection of the starting tether 19.

The greater the distance L, the greater is the achieved effort.

Moreover, the greater angle α between the resilient for bending spoke and a wall of the high-rise facility, the greater is the accumulated effort.

The wall of the high-rise facility is denoted by position S.

A distance M which represents a distance from the central axis of the device to free end of the resilient for bending spoke is of great importance. The present distance determines a midship of the device for rescuing. The greater the midship of the device for rescuing, the lesser is the speed of lowering, all other things being equal and correspondingly, the greater is the probability of the safe touchdown.

The resilient for bending spokes of the same known technical solution wherein the angle α has been increased are denoted by position 22. The point of fastening the connectors between the adjacent resilient for bending spokes is denoted by position 23.

It is evident that the distance L has been also increased that means a possibility to generate a greater effort for repulsion of the device for rescuing from the high-rise facility and correspondingly, a possibility of shaping better flying away trajectory and a greater moving away from the high-rise facility.

However, a distance M₂ and correspondingly, the midship of the device for rescuing will be lesser that means a greater speed of lowering and decrease in the probability of the safe touchdown.

To increase the midship of the device for rescuing it is necessary to increase the length of the resilient for bending spokes. However, it will also result in increase of the weight of the device for rescuing and correspondingly, enhancement of speed of lowering and decrease in the probability of the safe touchdown.

According to the present invention the resilient for bending spokes 2 are embodied as curved in the direction from the central axis of the device for rescuing.

In the present case it is provided an additional effort for repulsion of the device for rescuing from the high-rise facility which is analogous to the effort with the resilient for bending spokes 22, in doing so the midship of the device for rescuing and its weight are the same as the midship and the weight of the device comprising the resilient for bending spokes 20 that provides enhancement of the reliability of the device for rescuing, shaping of better flying away trajectory and increase in the probability of the safe touchdown.

The diagram of arrangement of the elements in the device for rescuing according to the present invention comprising the resilient for bending spokes 11 which are curved along the full length compared to the known technical solution is shown in Fig. 11. All the aspects of the present variant of embodiment of the invention are analogous to those described with reference to Fig. 10.

In the present case it is also provided the additional effort for repulsion of the device for rescuing from the high-rise facility which is analogous to the effort with the resilient for bending spokes 22, in doing so the midship of the device for rescuing and its weight are the same as the midship and the weight of the device comprising the resilient for bending spokes 20 that provides enhancement of the reliability of the device for rescuing, shaping of better flying away trajectory and increase in the probability of the safe touchdown.

## Claims

1. Device for rescuing (1, 10, 12, 14, 16) from a high-rise facility comprising:
several resilient for bending spokes (2, 11, 15, 17) interconnected on one end to form a pyramidal figure, wherein the spokes (2, 11, 15, 17) are located on the edges;
an aerodynamic deceleration element (8) fastened to the spokes (2, 11, 15, 17);
connectors (4) located between the adjacent resilient for bending spokes (2, 11, 15, 17), in so doing the connectors (4) are located at some distance from the ends of the resilient for bending spokes (2, 11, 15, 17);
a buffer element fastened in a point of connection of the resilient for bending spokes (2, 11, 15, 17), and
a means of fastening an object to be rescued fastened in the point of connection of the resilient for bending spokes (2, 11, 15, 17) on the other side with respect to the buffer element,
**characterized in that** each of the resilient for bending spokes (2, 11, 15, 17) is embodied as curved sideways from a central axis of the device (5).

2. The device (1, 10, 12, 14, 16) as claimed in claim 1 **characterized in that** the resilient for bending spokes (2, 11, 15, 17) and the connectors (4) represent inflatable elements and additionally comprises at least one gas-filling means to fill the resilient for bending spokes (2, 11, 15, 17) and the connectors (4).

3. The device (1, 10, 12, 14, 16) as claimed in claim 2 **characterized in that** the resilient for bending spokes (2, 11, 15, 17) and the connectors (4) have a single interior volume.

4. The device (1, 10, 12, 14, 16) as claimed in any one of the claims 1, 2 and 3 **characterized in that** the aerodynamic deceleration element represents deceleration shields (8) fastened to the resilient for bending spokes (2, 11, 15, 17) between the adjacent resilient for bending spokes (2, 11, 15, 17).

5. The device (1, 10, 12, 14, 16) as claimed in any one of the claims 1, 2 and 3 **characterized in that** the aerodynamic deceleration element represents parachute domes (18) fastened to the resilient for bending spokes (2, 11, 15, 17) between the adjacent resilient for bending spokes (2, 11, 15, 17).

6. The device (1, 10, 12, 14, 16) as claimed in any one of the claims 1, 2 and 3 **characterized in that** the resilient for bending spokes (2, 11, 15, 17) are interconnected through a connection element, representing a toroidal chamber (3) and the buffer element is embodied as several inflatable spokes (6, 13) fastened to the connection element and directed oppositely to the resilient for bending spokes (2, 11, 15, 17) and the ends of the inflatable spokes (6, 13) of the buffer device are interconnected using inextensible or low-extensible connecting elements.

7. The device (1, 10, 12, 14, 16) as claimed in claim 6 **characterized in that** inextensible or low-extensible material (7) serving as the inextensible or low-extensible connecting elements is fastened to the ends of the inflatable spokes (6, 13) of the buffer device.

8. The device (1, 10, 12, 14, 16) as claimed in claim 6 **characterized in that** the connecting element represents an inflatable element, all the inflatable elements of the device (1, 10, 12, 14, 16) have a single volume and the device additionally comprises at least one gas-filling means to fill all the inflatable elements of the device for rescuing (1, 10, 12, 14, 16).

9. The device as claimed in any one of the claims 6 and 7 **characterized in that** the inflatable spokes (6, 13) of the buffer element are embodied as curved.

10. The device as claimed in any one of the claims 2-9 **characterized in that**
the device comprises
a means of fixation of the device for rescuing in relation to the high-rise facility and
the device for rescuing being embodied with a possibility to disconnect the means of fixation upon achievement of a determined degree of filling the inflatable elements of the device with gas.

11. The device as claimed in claim 10 **characterized in that** the gas-filling source continues filling of the inflatable elements of the device for rescuing after disconnecting of the means of fixation.

12. Method for actuation of the device for rescuing (1, 10, 12, 14, 16) from a high-rise facility according to claim 10 comprising the inflatable elements of the device to be filled with gas to which the aerodynamic deceleration element is fastened, at least one source to fill the inflatable elements of the device with gas and the means of fixation of the device for rescuing (1, 10, 12, 14, 16) in relation to the high-rise facility consisting in:
blocking of the means of fixation of the device for rescuing (1, 10, 12, 14, 16) in relation to the high-rise facility and filling the inflatable elements of the device with gas using at least one source to fill the inflatable elements of the device with gas;
disconnection of the means of fixation upon achievement of the determined degree of filling the inflatable elements of the device with gas.

13. The method as claimed in claim 12 **characterized in that** filling of the inflatable elements of the device with gas continues after disconnection of the means of fixation.

14. The method as claimed in claim 13 **characterized in that** the inflatable elements of the device comprise several resilient for bending spokes (2, 6, 11, 13, 15, 17, 20, 22), the connecting element, in doing so the resilient for bending spokes (2, 6, 11, 13, 15, 17, 20, 22) are adjoined on one side to the connecting element, the connectors (4) located between the adjacent resilient for bending spokes (2, 6, 11, 13, 15, 17, 20, 22), in doing so the connectors (4) are located at some distance from the ends of the resilient for bending spokes (2, 6, 11, 13, 15, 17, 20, 22) and at the step prior to disconnection of the means of fixation the resilient for bending spokes (2, 6, 11, 13, 15, 17, 20, 22) rest against a wall of the high-rise facility from outer side and the connectors (4) form a perimeter which does not allow the resilient for bending spokes (2, 6, 11, 13, 15, 17, 20, 22) to stretch into the active position.

15. The method as claimed in claim 14 **characterized in that** upon filling the inflatable elements of the device with gas after disconnection of the means of fixation the device for rescuing (1, 10, 12, 14, 16) assumes its final active shape.

## Patentansprüche

1. Vorrichtung zur Rettung (1, 10, 12, 14, 16) von einer hohen Einrichtung, die Folgendes umfasst:
mehrere rückstellfähig biegbare Speichen (2, 11, 15, 17), die an einem Ende miteinander verbunden sind, um eine pyramidale Gestalt auszubilden, wobei die Speichen (2, 11, 15, 17) an den Kanten angeordnet sind;
ein aerodynamisches Entschleunigungselement (8),
das an den Speichen (2, 11, 15, 17) befestigt ist;
Verbinder (4), die zwischen den benachbarten, rückstellfähig biegbaren Speichen (2, 11, 15, 17) angeordnet sind, wodurch die Verbinder (4) mit einem gewissen Abstand von den Enden der rückstellfähig biegbaren Speichen (2, 11, 15, 17) angeordnet sind;
ein Dämpfungselement, das an einer Verbindungsstelle der rückstellfähig biegbare Speichen (2, 11, 15, 17) befestigt ist, und
ein Befestigungsmittel für ein zu rettendes Objekt, das an der Verbindungsstelle der rückstellfähig biegbaren Speichen (2, 11, 15, 17) an der im Vergleich zu dem Dämpfungselement anderen Seite befestigt ist,
**dadurch gekennzeichnet, dass** jede der rückstellfähig biegbaren Speichen (2, 11, 15, 17) kurvenförmig in seitlicher Richtung von einer zentralen Achse der Vorrichtung (5) ausgebildet ist.

2. Vorrichtung (1, 10, 12, 14, 16) gemäß Anspruch 1, **dadurch gekennzeichnet, dass** die rückstellfähig biegbaren Speichen (2, 11, 15, 17) und die Verbinder (4) aufblasbare Elemente verkörpern und zusätzlich wenigstens ein Mittel zum Gaseinfüllen vorhanden ist, um die rückstellfähig biegbaren Speichen (2, 11, 15, 17) und die Verbinder (4) zu füllen.

3. Vorrichtung (1, 10, 12, 14, 16) gemäß Anspruch 2, **dadurch gekennzeichnet, dass** die rückstellfähig biegbaren Speichen (2, 11, 15, 17) und die Verbinder (4) ein einziges Innenvolumen haben.

4. Vorrichtung (1, 10, 12, 14, 16) gemäß irgendeinem der Ansprüche 1, 2 und 3, **dadurch gekennzeichnet, dass** das aerodynamische Entschleunigungselement durch Entschleunigungsschilde (8) verkörpert wird, die an den rückstellfähig biegbaren Speichen (2, 11, 15, 17) zwischen den benachbarten rückstellfähig biegbaren Speichen (2, 11, 15, 17) befestigt sind.

5. Vorrichtung (1, 10, 12, 14, 16) gemäß irgendeinem der Ansprüche 1, 2 und 3, **dadurch gekennzeichnet, dass** das aerodynamische Entschleunigungelement durch Fallschirmkuppeln (18) gebildet wird, die an den rückstellfähig biegbaren Speichen (2, 11, 15, 17) zwischen den benachbarten rückstellfähig biegbaren Speichen (2, 11, 15, 17) befestigt sind.

6. Vorrichtung (1, 10, 12, 14, 16) gemäß irgendeinem der Ansprüche 1, 2 und 3, **dadurch gekennzeichnet, dass** die rückstellfähig biegbaren Speichen (2, 11, 15, 17) durch ein Verbindungselement verbunden sind, das eine toroidale Kammer (3) repräsentiert, und dass das Dämpfungselement durch mehrere aufblasbare Speichen (6, 13) verkörpert wird, die an dem Verbindungselement und direkt gegenüberliegend zu den rückstellfähig biegbaren Speichen (2, 11, 15, 17) befestigt sind, und dass die Enden der aufblasbaren Speichen (6, 13) der Dämpfungsvorrichtung durch starre oder wenig dehnbare Verbindungselemente verbunden sind.

7. Vorrichtung (1, 10, 12, 14, 16) gemäß Anspruch 6, **dadurch gekennzeichnet, dass** starres oder wenig dehnbares Material (7), das für die starren oder wenig dehnbaren Verbindungselemente verwendet wird, an den Enden der aufblasbaren Speichen (6, 13) der Dämpfungsvorrichtung befestigt ist.

8. Vorrichtung (1, 10, 12, 14, 16) gemäß Anspruch 6, **dadurch gekennzeichnet, dass** das Verbindungselement durch ein aufblasbares Element verkörpert wird, dass alle aufblasbaren Elemente der Vorrichtung (1, 10, 12, 14, 16) ein einziges Volumen haben und dass die Vorrichtung zusätzlich wenigstens ein Mittel zum Gaseinfüllen umfasst, um alle aufblasbaren Elemente der Vorrichtung zur Rettung (1, 10, 12, 14, 16) zu füllen.

9. Vorrichtung gemäß irgendeinem der Ansprüche 6 und 7, **dadurch gekennzeichnet, dass** die aufblasbaren Speichen (6, 13) des Dämpfungselements kurvenartig ausgebildet sind.

10. Vorrichtung nach irgendeinem der Ansprüche 2 bis 9, **dadurch gekennzeichnet, dass** die Vorrichtung ein Mittel zur Fixierung der Vorrichtung zur Rettung hinsichtlich der hohen Einrichtung umfasst,
und
dass die Vorrichtung zur Rettung so ausgebildet ist, dass das Mittel zur Fixierung lösbar ist, wenn ein vorgegebener Füllgrad der aufblasbaren Elemente mit Gas erreicht ist.

11. Vorrichtung gemäß Anspruch 10, **dadurch gekennzeichnet, dass** die Quelle für das Gaseinfüllen das Füllen der aufblasbaren Elemente der Vorrichtung zur Rettung nach dem Lösen des Mittels zur Fixierung fortsetzt.

12. Verfahren zur Betätigung der Vorrichtung zur Rettung (1, 10, 12, 14, 16) von einer hohen Einrichtung gemäß Anspruch 10, die die aufblasbaren Elemente der Vorrichtung, die mit Gas zu füllen sind, woran das aerodynamische Entschleunigungselement befestigt ist, wenigstens eine Quelle zum Füllen der aufblasbaren Elemente der Vorrichtung mit Gas und das Mittel zur Fixierung der Vorrichtung zur Rettung (1, 10, 12, 14, 16) in Bezug auf die hohe Einrichtung umfasst, wobei das Verfahren besteht aus:
Festsetzen des Mittels zur Fixierung der Vorrichtung zur Rettung (1, 10, 12, 14, 16) in Bezug auf die hohe Einrichtung und Füllen der aufblasbaren Elemente der Vorrichtung mit Gas unter Verwendung von wenigstens einer Quelle zum Füllen der aufblasbaren Elemente der Vorrichtung mit Gas;
Lösen des Mittels zur Fixierung nach Erreichen des vorgegebenen Füllgrads mit Gas der aufblasbaren Elemente der Vorrichtung.

13. Verfahren gemäß Anspruch 12, **dadurch gekennzeichnet, dass** das Füllen der aufblasbaren Elemente der Vorrichtung mit Gas nach dem Lösen des Mittels zur Fixierung fortgesetzt wird.

14. Verfahren gemäß Anspruch 13, **dadurch gekennzeichnet, dass** die aufblasbaren Elemente der Vorrichtung mehrere rückstellfähig biegbare Speichen (2, 6, 11, 13, 15, 17, 20, 22) umfassen, das Verbindungselement umfassen, wodurch die rückstellfähig biegbaren Speichen (2, 6, 11, 13, 15, 17, 20, 22) auf einer Seite neben dem Verbindungselement liegen, und die Verbinder (4) umfassen, wobei sich die Verbinder (4) zwischen den benachbarten, rückstellfähig biegbaren Speichen (2, 6, 11, 13, 15, 17, 20, 22) befinden, wodurch die Verbinder (4) mit etwas Abstand von den Enden der rückstellfähig biegbaren Speichen (2, 6, 11, 13, 15, 17, 20, 22) angeordnet sind und wobei bei dem Schritt vor dem Lösen des Mittels zur Fixierung die rückstellfähig biegbaren Speichen (2, 6, 11, 13, 15, 17, 20, 22) an einer Außenseite einer Wand der hohen Einrichtung (2, 6, 11, 13, 15, 17, 20, 22) anliegen und wobei die Verbinder (4) eine Umfassung ausbilden, der es den rückstellfähig biegbaren Speichen (2, 6, 11, 13, 15, 17, 20, 22) nicht erlaubt, sich in die aktive Position auszustrecken.

15. Verfahren gemäß Anspruch 14, **dadurch gekennzeichnet, dass** nach dem Füllen der aufblasbaren Elemente der Vorrichtung mit Gas nach dem Lösen des Mittels zur Fixierung, die Vorrichtung zur Rettung (1, 10, 12, 14, 16) ihre endgültige, aktive Gestalt einnimmt.

## Revendications

1. Dispositif de sauvetage (1, 10, 12, 14, 16) d'un immeuble de grande hauteur comprenant :
plusieurs rayons résistants à la flexion (2, 11, 15, 17) interconnectés à une extrémité pour former une figure pyramidale, les rayons (2, 11, 15, 17) étant situés sur les bords ;
un élément de décélération aérodynamique (8) fixé aux rayons (2, 11, 15, 17) ; des connecteurs (4) situés entre les rayons résistants à la flexion adjacents (2, 11, 15, 17), ce faisant les connecteurs (4) étant situés à quelque distance des extrémités des rayons résistants à la flexion (2, 11, 15, 17) ;
un élément tampon fixé à un point de connexion des rayons résistants à la flexion (2, 11, 15, 17) et
un moyen de fixation d'un objet à sauver fixé au point de connexion des rayons résistants à la flexion (2, 11, 15, 17) de l'autre côté par rapport à l'élément tampon,
**caractérisé en ce que** chacun des rayons résistants à la flexion (2, 11, 15, 17) est concrétisé comme étant courbé de côté à partir d'un axe central du dispositif (5).

2. Dispositif (1, 10, 12, 14, 16) selon la revendication 1, **caractérisé en ce que** les rayons résistants à la flexion (2, 11, 15, 17) et les connecteurs (4) représentent des éléments gonflables et qu'il comprend en plus au moins un moyen de remplissage de gaz pour remplir les rayons résistants à la flexion (2, 11, 15, 17) et les connecteurs (4).

3. Dispositif (1, 10, 12, 14, 16) selon la revendication 2, **caractérisé en ce que** les rayons résistants à la flexion (2, 11, 15, 17) et les connecteurs (4) ont un seul volume intérieur.

4. Dispositif (1, 10, 12, 14, 16) selon l'une quelconque des revendications 1, 2 et 3, **caractérisé en ce que** l'élément de décélération aérodynamique représente des boucliers de décélération (8) fixés aux rayons résistants à la flexion (2, 11, 15, 17) entre les rayons résistants à la flexion adjacents (2, 11, 15, 17).

5. Dispositif (1, 10, 12, 14, 16) selon l'une quelconque des revendications 1, 2 et 3, **caractérisé en ce que** l'élément de décélération aérodynamique représente des dômes de parachute (18) fixés aux rayons résistants à la flexion (2, 11, 15, 17) entre les rayons résistants à la flexion adjacents (2, 11, 15, 17).

6. Dispositif (1, 10, 12, 14, 16) selon l'une quelconque des revendications 1, 2 et 3, **caractérisé en ce que** les rayons résistants à la flexion (2, 11, 15, 17) sont interconnectés par un élément de connexion qui représente une chambre toroïdale (3) et l'élément tampon est concrétisé comme plusieurs rayons gonflables (6, 13) fixés à l'élément de connexion et dirigés de manière opposée aux rayons résistants à la flexion (2, 11, 15, 17) et que les extrémités des rayons gonflables (6, 13) du dispositif tampon sont interconnectées en utilisant des éléments de connexion inextensibles ou faiblement extensibles.

7. Dispositif (1, 10, 12, 14, 16) selon la revendication 6, **caractérisé en ce que** du matériau inextensible ou faiblement extensible (7) qui sert d'éléments de connexion inextensibles ou faiblement extensibles est fixé aux extrémités des rayons gonflables (6, 13) du dispositif tampon.

8. Dispositif (1, 10, 12, 14, 16) selon la revendication 6, **caractérisé en ce que** l'élément de connexion représente un élément gonflable, tous les éléments gonflables du dispositif (1, 10, 12, 14, 16) ont un seul volume et le dispositif comprend de plus au moins un moyen de remplissage de gaz pour remplir tous les éléments gonflables du dispositif de sauvetage (1, 10, 12, 14, 16).

9. Dispositif selon l'une quelconque des revendications 6 et 7, **caractérisé en ce que** les rayons gonflables (6, 13) de l'élément tampon sont concrétisés en étant courbés.

10. Dispositif selon l'une quelconque des revendications 2-9, **caractérisé en ce que** le dispositif comprend un moyen de fixation du dispositif de sauvetage en relation avec l'immeuble de grande hauteur et le dispositif de sauvetage étant concrétisé avec une possibilité pour déconnecter le moyen de fixation après réalisation d'un degré déterminé de remplissage des éléments gonflables du dispositif avec du gaz.

11. Dispositif selon la revendication 10, **caractérisé en ce que** la source de remplissage de gaz continue le remplissage des éléments gonflables du dispositif de sauvetage après la déconnexion du moyen de fixation.

12. Procédé d'actionnement du dispositif de sauvetage (1, 10, 12, 14, 16) d'un immeuble de grande hauteur selon la revendication 10 comprenant les éléments gonflables du dispositif à remplir avec du gaz auxquels l'élément de décélération aérodynamique est fixé, au moins une source pour remplir les éléments gonflables du dispositif avec du gaz et le moyen de fixation du dispositif de sauvetage (1, 10, 12, 14, 16) en relation avec l'immeuble de grande hauteur consistant en :
le blocage du moyen de fixation du dispositif de sauvetage (1, 10, 12, 14, 16) en relation avec l'immeuble de grande hauteur et le remplissage des éléments gonflables du dispositif avec du gaz en utilisant au moins une source pour remplir les éléments gonflables du dispositif avec du gaz ;
la déconnexion du moyen de fixation après réalisation d'un degré déterminé de remplissage des éléments gonflables du dispositif avec du gaz.

13. Procédé selon la revendication 12, **caractérisé en ce que** le remplissage des éléments gonflables du dispositif avec du gaz continue après la déconnexion du moyen de fixation.

14. Procédé selon la revendication 13, **caractérisé en ce que** les éléments gonflables du dispositif comprennent plusieurs rayons résistants à la flexion (2, 6, 11, 13, 15, 17, 20, 22), l'élément de connexion, ce faisant les rayons résistants à la flexion (2, 6, 11, 13, 15, 17, 20, 22) sont accolés sur un côté à l'élément de connexion, les connecteurs (4) situés entre les rayons résistants à la flexion adjacents (2, 11, 15, 17, 20, 22), ce faisant les connecteurs (4) sont situés à quelque distance des extrémités des rayons résistants à la flexion (2, 11, 15, 17, 20, 22) et à l'étape avant la déconnexion du moyen de fixation les rayons résistants à la flexion (2, 6, 11, 13, 15, 17, 20, 22) reposent contre une paroi de l'immeuble de grande hauteur de l'extérieur et les connecteurs (4) forment un périmètre qui ne permet pas aux rayons résistants à la flexion (2, 6, 11, 13, 15, 17, 20, 22) de s'étirer dans la position active.

15. Procédé selon la revendication 14, **caractérisé en ce que** lors du remplissage des éléments gonflables du dispositif avec du gaz, après la déconnexion du moyen de fixation, le dispositif de sauvetage (1, 10, 12 ,14, 16) prend sa forme active finale.
